(19) **Europäisches Patentamt**
**European Patent Office**
**Office européen des brevets**

(11) **EP 4 518 410 A1**

(12) **EUROPEAN PATENT APPLICATION**
published in accordance with Art. 153(4) EPC

(43) Date of publication:
**05.03.2025 Bulletin 2025/10**

(21) Application number: **22939024.0**

(22) Date of filing: **27.04.2022**

(51) International Patent Classification (IPC):
***H04W 24/10*** *(2009.01)*

(52) Cooperative Patent Classification (CPC):
**H04W 24/10**

(86) International application number:
**PCT/CN2022/089667**

(87) International publication number:
**WO 2023/206171 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **CSI REPORTING METHOD AND APPARATUS, PRECODING MATRIX DETERMINING METHOD AND APPARATUS, AND DEVICE**

(57) The present application relates to the field of mobile communications, and discloses a CSI reporting method and apparatus, a precoding matrix determining method and apparatus, and a device. The method comprises: receiving downlink pilot signals sent by a network device at T consecutive moments; estimating downlink channel information at the T consecutive moments according to the downlink pilot signals at the T consecutive moments; determining, according to the downlink channel information at the T consecutive moments, CSI corresponding to the T consecutive moments; and reporting the CSI to the network device, wherein the CSI is used by the network device to calculate a precoding matrix for downlink data transmission at the moment t, and the moment t is later than the T consecutive moments. According to the present application, the network device can calculate the precoding matrixes at different moments in the future according to the CSI reported by a terminal device at a time. The terminal device is prevented from frequently reporting the CSI due to rapid movement of the terminal device while the data transmission performance is ensured, the period in which the terminal device reports the CSI is reduced, and the uplink feedback overhead of the terminal device is reduced.

receiving downlink pilot signals transmitted by a network device at T consecutive time points — 202

estimating downlink channel information at the T consecutive time points according to the downlink pilot signals at the T consecutive time points — 204

determining CSI corresponding to the T consecutive time points according to the downlink channel information at the T consecutive time points — 206

reporting the CSI to the network device — 208

FIG. 2

**Description**

<u>TECHNICAL FIELD</u>

The disclosure relates to the field of mobile communication, and more particularly, to a method for reporting channel status information (CSI), an apparatus for reporting CSI, a method for determining a precoding matrix, an apparatus for determining a precoding matrix, and a device.

<u>BACKGROUND</u>

In a new radio (NR) system, a terminal reports channel status information (CSI) to a network device, so that the network device can calculate a precoding matrix used for downlink data transmission based on the information reported by the terminal.

In Release 16 (R16), the R16 type II (Type II) codebook and the R16 Type II port selection codebook are provided. In R17, the R17 Type II port selection codebook is provided. Through the above codebooks, the terminal can perform high-precision CSI quantized feedback.

For a terminal moving at a low speed, the network device can accurately calculate a precoding matrix of a corresponding channel based on the above codebook reported by the terminal, thereby improving the performance of data transmission. For a terminal moving at a medium-and-high speed, if the CSI reporting cycle same as that of the terminal moving at a low speed is used, since the movement of the terminal may cause rapid changes in the channel at different time points, the precoding matrix calculated based on the above codebook may have a mismatch with the channel, thereby reducing the performance of data transmission. For the rapidly changing channel, how to design a corresponding codebook and calculate a precoding matrix that matches the channel is an urgent problem to be solved.

<u>SUMMARY</u>

Embodiments of the present disclosure provide a method for reporting channel status information (CSI), an apparatus for reporting CSI, a method for determining precoding matrix, an apparatus for determining precoding matrix, and a device. The technical solutions are as follows.

According to one aspect of the present disclosure, a method for reporting CSI is provided. The method is performed by a terminal. The method includes:

   receiving downlink pilot signals transmitted by a network device at T consecutive time points;
   estimating downlink channel information at the T consecutive time points according to the downlink pilot signals at the T consecutive time points;
   determining CSI corresponding to the T consecutive time points according to the downlink channel information at the T consecutive time points; and
   reporting the CSI to the network device;
   in which, the CSI is used by the network device to calculate a precoding matrix for downlink data transmission at a time point t, in which the time point t is after the T consecutive time points, and T is a positive integer.

According to another aspect of the present disclosure, a method for determining a precoding matrix is provided. The method is performed by a network device, and the method includes:

   transmitting downlink pilot signals to a terminal at T consecutive time points;
   receiving CSI corresponding to the T consecutive time points reported by the terminal; and
   calculating a precoding matrix for downlink data transmission at a time point t according to the CSI;
   in which the CSI is determined by the terminal according to the downlink pilot signals, the time point t is after the T consecutive time points, and T is a positive integer.

According to another aspect of the present disclosure, an apparatus for reporting CSI is provided. The apparatus includes:

   a receiving module, configured to receive downlink pilot signals sent by a network device at T consecutive time points; and
   a determining module, configured to estimate downlink channel information at the T consecutive time points according to the downlink pilot signals at the T consecutive time points;
   in which the determining module is further configured to determine CSI corresponding to the T consecutive time points according to the downlink channel information at the T consecutive time points; and
a transmitting module, configured to report the CSI to the network device;
in which, the CSI is used by the network device to calculate a precoding matrix for downlink data transmission at a time point t, in which the time point t is after the T consecutive time points, and T is a positive integer.

According to another aspect of the present disclosure, an apparatus for determining a precoding matrix is provided, and the device includes:

a transmitting module, configured to transmit downlink pilot signals to a terminal at T consecutive time points;
a receiving module, configured to receive CSI corresponding to the T consecutive time points reported by the terminal; and
a calculating module, configured to a calculate a precoding matrix for downlink data transmission at a time point t according to the CSI;
in which the CSI is determined by the terminal according to the downlink pilot signals, and the time point t is after the T consecutive time points, and T is a positive integer.

According to another aspect of the present disclosure, a terminal is provided. The terminal includes: a processor; a transceiver coupled to the processor; and a memory for storing executable instructions for the processor. The processor is configured to load and execute the executable instructions to perform the method for reporting CSI as described in the above aspect.

According to another aspect of the present disclosure, a network device is provided. The network device includes: a processor; a transceiver coupled to the processor; a memory for storing executable instructions for the processor. The processor is configured to load and execute the executable instructions to perform the method for determining a precoding matrix as described in the above aspect.

According to another aspect of the present disclosure, a computer-readable storage medium is provided, in which executable instructions are stored, and the executable instructions are loaded and executed by a processor to perform the method for reporting CSI or the method for determining a precoding matrix as described in the above aspects.

According to another aspect of the present disclosure, a chip is provided. The chip includes a programmable logic circuit and/or program instructions. When the chip is run on a computer device, the method for reporting CSI or the method for determining a precoding matrix as described in the above aspects is performed.

According to another aspect of the present disclosure, a computer program product or a computer program is provided. The computer program product or computer program includes computer instructions. The computer instructions are stored in a computer-readable storage medium. A processor reads the computer instructions from the computer-readable storage medium and executes the computer instructions, so that the computer device performs the method for reporting CSI or the method for determining a precoding matrix as described in the above aspects.

The technical solution provided by the disclosure at least includes the following beneficial effects:
The terminal determines the CSI according to the downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents the terminal from frequently reporting the CSI due to rapid movement, reduces a period for the terminal to report the CSI, and reduces the uplink feedback overhead of terminal.

## BRIEF DESCRIPTION OF THE DRAWINGS

In order to more clearly illustrate the technical solutions in embodiments of the present disclosure, the drawings needed to be used in the description of the embodiments will be briefly introduced below. Obviously, the drawings in the following description are only some embodiments of the present disclosure. For those of skilled in the art, other drawings can also be obtained based on these drawings without creative efforts.

FIG. 1 is a schematic diagram of a system architecture of a communication system provided by an embodiment of the present disclosure;
FIG. 2 is a flow chart of a method for reporting channel status information (CSI) provided by an embodiment of the present disclosure;
FIG. 3 is a flow chart of a method for determining a precoding matrix provided by an embodiment of the present disclosure;
FIG. 4 is a flow chart of a method for determining a precoding matrix provided by an embodiment of the present disclosure;

FIG. 5 is a schematic diagram of a method for transmitting a channel status information-reference signal (CSI-RS) provided by an embodiment of the present disclosure;

FIG. 6 is a flow chart of a method for determining a precoding matrix provided by an embodiment of the present disclosure;

FIG. 7 is a schematic diagram of a method for transmitting a CSI-RS provided by an embodiment of the present disclosure;

FIG. 8 is a flow chart of a method for determining a precoding matrix provided by an embodiment of the present disclosure;

FIG. 9 is a block diagram of an apparatus for reporting CSI provided by an embodiment of the present disclosure;

FIG. 10 is a block diagram of an apparatus for determining a precoding matrix provided by an embodiment of the present disclosure;

FIG. 11 is a schematic diagram of a communication device provided by an embodiment of the present disclosure.

## DETAILED DESCRIPTION

In order to make the purpose, technical solutions and advantages of the present disclosure clear, embodiments of the present disclosure will be further described in detail below with reference to the accompanying drawings.

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with the disclosure. Rather, they are merely examples of apparatus and methods consistent with aspects of the disclosure as detailed in the appended claims.

The terminology used in the disclosure is for the purpose of describing particular embodiments only and is not intended to be limiting of the disclosure. As used in this disclosure and the appended claims, the singular forms "a," "said" and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in this disclosure to describe various information, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "while" or "in response to determining."

In a new radio (NR) system, a terminal reports channel status information (CSI) to a network device, so that the network device can calculate a precoding matrix used for downlink data transmission based on the information reported by the terminal. In Release 16 (R16), the R16 Type II codebook and the R16 Type II port selection codebook are provided. In R17, the R17 Type II port selection codebook is provided. Through the above codebooks, the terminal can implement high-precision CSI quantized feedback. The network device calculates the precoding matrix used for downlink data transmission based on the above codebook reported by the terminal, which can make the data transmission process to adapt a change in a channel status and improve the performance of data transmission.

For the R16 Type II codebook and the R16 Type II port selection codebook, a codebook structure can be expressed as $W = W_1 \widetilde{W}_2 W_f^H$. $W_f \in \mathbb{C}^{N_3 \times M_v}$ represents a frequency domain compression matrix composed of a frequency domain basis vectors (FD basis vectors), $N_3$ represents a number of subbands of a Precoding Matrix Indication (PMI), $M_v$ represents a number of FD basis vectors when a transmission rank is v, and $\mathbb{C}$ represents a complex number.

For the R16 Type II codebook, $W_1 \in \mathbb{N}^{P \times 2L}$ represents a spatial domain compression diagonal matrix composed of Spatial Domain basis vectors (SD basis vectors), $N_t$ represents a number of ports of transmitting antennas, and L represents a number of SD basis vectors contained in one polarization direction. Usually the antenna has two polarization directions, and the two polarization directions use the same SD basis vector. $\widetilde{W}_2$ represents a matrix composed of combination coefficients.

When the transmission rank v>1, all transmission layers use the same L SD basis vectors, each layer independently uses a $\widetilde{W}_2$ and $W_f$, and different layers can use different $M_v$ FD basis vectors. The transmission layer is used by network device to map codewords to ports. For example, the calculation of the $W_1$, $\widetilde{W}_2$ and $W_f$ are calculated by: the terminal estimating downlink channel information based on a received Channel Status Information-Reference Signal (CSI-RS), and performing calculation.

When a user (terminal) moves at a medium-high speed, in order to obtain an accurate precoding matrix, the user needs to use a small reporting period to report the CSI. If the above Type II codebook is still used for reporting CSI, the uplink feedback overhead of the terminal may be greatly increased. If the period for reporting CSI used by the user remains unchanged or is large, system performance may be reduced.

For a terminal moving at a medium-high speeds, a Doppler (Doppler) offset may cause the channel to change rapidly with time. If the above Type II codebook is still used, the terminal needs to frequently feedback CSI to adapt to the change of the channel, to ensure data transmission performance, otherwise data transmission performance may be reduced. However, frequently reporting CSI may increase the uplink feedback overhead of the terminal. Within a certain period of time, the channel information at different time points are correlated with each other in the time domain, or the Doppler offset is fixed within a certain period of time, so there is correlation between the channel information in the time domain. With the method provided by embodiments of the present disclosure, the time domain correlation of the channel information or the Doppler information of the channel can be used to solve the above problem. Enhanced design is performed on the above-mentioned R16 Type II codebook using the Doppler information of the channel, it is possible to enable the network device to calculate precoding matrices at different time points in the future based on the CSI reported once by the terminal. While ensuring data transmission performance, it prevents the terminal from frequently reporting CSI due to rapid movement, reduces the period for the terminal to report CSI, and reduces the uplink feedback overhead of the terminal.

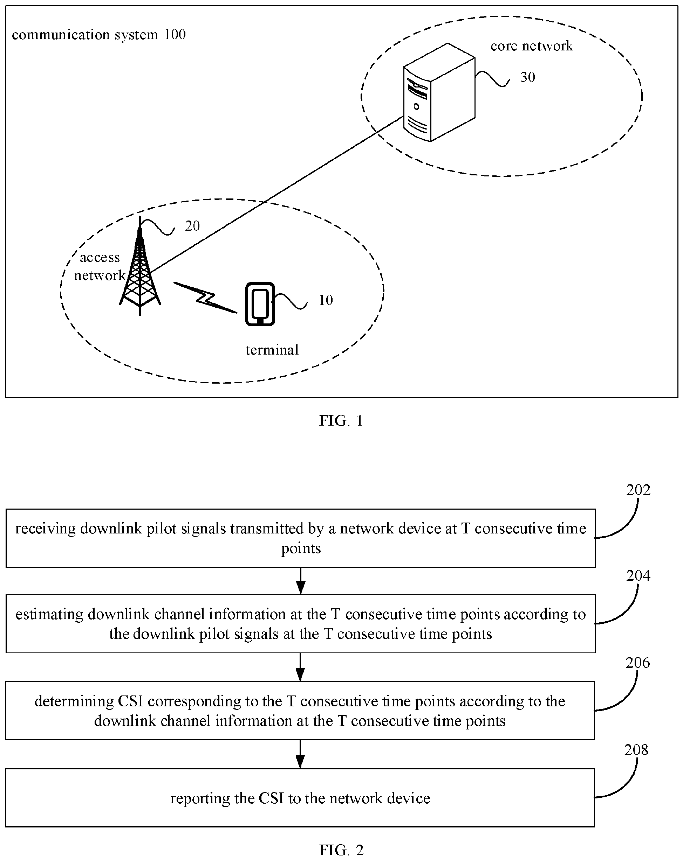

FIG. 1 shows a schematic diagram of a system architecture of a communication system provided by an embodiment of the present disclosure. The system architecture may include terminal 10, an access network device 20 and a core network device 30.

The terminal 10 may refer to a UE (User Equipment), an access terminal, a user unit, a user station, a mobile station, a mobile platform, a remote station, a remote terminal, a mobile device, a wireless communication device, a user agent or a user device. Optionally, the terminal may also be a cellular phone, a cordless phone, a SIP (Session Initiation Protocol) phone, a WLL (Wireless Local Loop) station, or a PDA (Personal Digital Assistant), a handheld device with a wireless communication function, a computing device or other processing devices connected to a wireless modem, a vehicle-mounted device, a wearable device, a terminal in a 5GS (5th Generation System, fifth-generation mobile communication system) or a future evolved PLMNs (Public Land Mobile Network) terminal, etc., and embodiments of the present disclosure are not limited to this. For convenience of description, the devices mentioned above are collectively referred to as terminals. The number of terminals 10 is usually multiple, and one or more terminals 10 may be distributed in a cell managed by each access network device 20.

The access network device 20 is a device deployed in an access network to provide a wireless communication function for the terminal 10. The access network device 20 may include various forms of macro base stations, micro base stations, relay stations, access points, etc. In systems using different wireless access technologies, the names of devices with an access network device function may be different. For example, in a 5G NR systems, they are called gNodeB or gNB. As communication technology evolves, the name "access network device" may change. For convenience of description, in embodiments of the present disclosure, the above-mentioned devices that provide the wireless communication function for the terminal 10 are collectively referred to as access network devices. Optionally, through the access network device 20, a communication relationship can be established between the terminal 10 and the core network device 30. For example, in an LTE system, the access network device 20 may be a EUTRAN (Evolved Universal Terrestrial Radio Access Network, Evolved Universal Terrestrial Radio Network) or one or more eNodeBs in the EUTRAN; in the 5G NR system, the access network device 20 may be a RAN or one or more gNBs in the RAN.

The functions of the core network device 30 includes providing user connections, user management, and carrying services, and serves as a bearer network to provide an interface to an external network. For example, the core network device in the 5G NR system can include an AMF (Access and Mobility Management Function) entity, a UPF (User Plane Function) entity, an SMF (Session Management Function) entity, a Location Management Function (LMF) entity and other derives. The access network device 20 and the core network device 30 may be collectively referred to as network devices. In embodiments of the disclosure, the core network device 30 is an LMF network element as an example for explanation.

In an example, the access network device 20 and the core network device 30 communi cate with each other through some over-the-air technology, such as an NG interface in the 5G NR system. The access network device 20 and the terminal 10 communicate with each other through some over-the-air technology, such as a Uu interface.

FIG. 2 shows a flow chart of a method for reporting CSI provided by an embodiment of the present disclosure. The method can be performed by the terminal shown in FIG. 1. The method includes followings.

Step 202, downlink pilot signals transmitted by a network device at T consecutive time points are received.

The downlink pilot signal is used by the terminal to determine downlink channel information. T is a positive integer. Optionally, the downlink pilot signal includes at least one of the following:

·a CSI-RS;
·a demodulation reference signal (DMRS); or

·a combination of the CSI-RS and the DMRS.

Optionally, the above parameter T is determined in at least one of the following ways:

·being configured by the network device; or
·being predefined through negotiation between the terminal device and the network device.

Step 204, downlink channel information at the T consecutive time points are estimated according to the downlink pilot signals at the T consecutive time points.

Optionally, the terminal can estimate the downlink channel information at each of the T consecutive time points based on the downlink pilot signal at each of the T consecutive time points. The downlink channel information is information used to reflect characteristics of a downlink channel.

Step 206, CSI corresponding to the T consecutive time points is determined according to the downlink channel information at the T consecutive time points.

The network device can determine a precoding matrix for downlink data transmission based on the CSI determined by the terminal. The CSI can also be called codebook parameter information. Optionally, information in the CSI includes the following two situations.

**First situation**

The CSI includes at least one of the following:

·spatial domain beam component indication information;
·frequency domain delay component indication information;
·time domain Doppler component indication information; or
·a combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal. The parameter L, parameter $M_v$ and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, the above parameter K is determined in at least one of the following ways:

·being configured by the network device;
·being predefined through negotiation between the terminal device and the network device; or
·being determined by the terminal according to the downlink channel information.

**In** a case where the terminal determines the parameter K according to the downlink channel information, the terminal reports the parameter K determined by the terminal to the network device.

Optionally, in the case where the parameter T and/or the parameter K are configured by the network device, the parameter T and/or the parameter K are configured for the terminal by the network device through at least one of the following signalings:

·a radio resource control (RRC) signaling;
·a medium access control-control unit (MAC-CE) signaling; or
·downlink control information (DCI).

Optionally, the time domain Doppler component meets at least one of the following conditions:

·time domain Doppler components corresponding to different polarization directions are the same or different;
·time domain Doppler components corresponding to different spatial-frequency components are the same or different; or
·time domain Doppler components corresponding to different time-frequency components are the same or different.

The spatial-frequency component is composed of the spatial domain beam component and the frequency domain delay component, the time-frequency component is composed of the frequency domain delay component and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals; or the time domain Doppler component is represented by a basis vector.

In the case where the time domain Doppler component is represented by a phase offset, if the parameter K is determined by the terminal, the parameter K is determined by the terminal based on a number of non-zero coefficients for each transmission layer.

Optionally, the time domain Doppler component is represented by a basis vector, and the basis vector includes at least one of:

  · a discrete Fourier transform (DFT) basis vector;
  · a discrete cosine transform (DCT) basis vector; or
  · a polynomial basis vector.

**Second situation**

The CSI includes at least one of the following:

  · spatial domain beam component indication information;
  · frequency domain delay component indication information; or
  · combination coefficient indication information.

The spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and $M_v$ are positive integers. For example, one non-zero coefficient can correspond to one beam, and the same information on the positions of the non-zero coefficients means that the same beam is used.

Optionally, the spatial domain beam component and the frequency domain delay component can be represented by basis vectors, for example, by discrete Fourier Transform. Each parameter in the above parameters L and $M_v$ is determined in at least one of the following ways:

  · being configured by the network device;
  · being predefined through negotiation between the terminal device and the network device; or
  · being determined by the terminal according to the downlink channel information.

Step 208, the CSI is reported to the network device.

Optionally, the terminal may report all or part of the information in the CSI determined by the terminal to the network device. The CSI is used by the network device to calculate a precoding matrix for downlink data transmission at a time point t. The time point t is after the T consecutive time points. Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

In conclusion, with the method provided in the embodiments, the terminal determines the CSI according to the downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents terminal from frequently reporting the CSI due to rapid movement, reduces a period for the terminal to report the CSI, and reduces the uplink feedback overhead of the terminal.

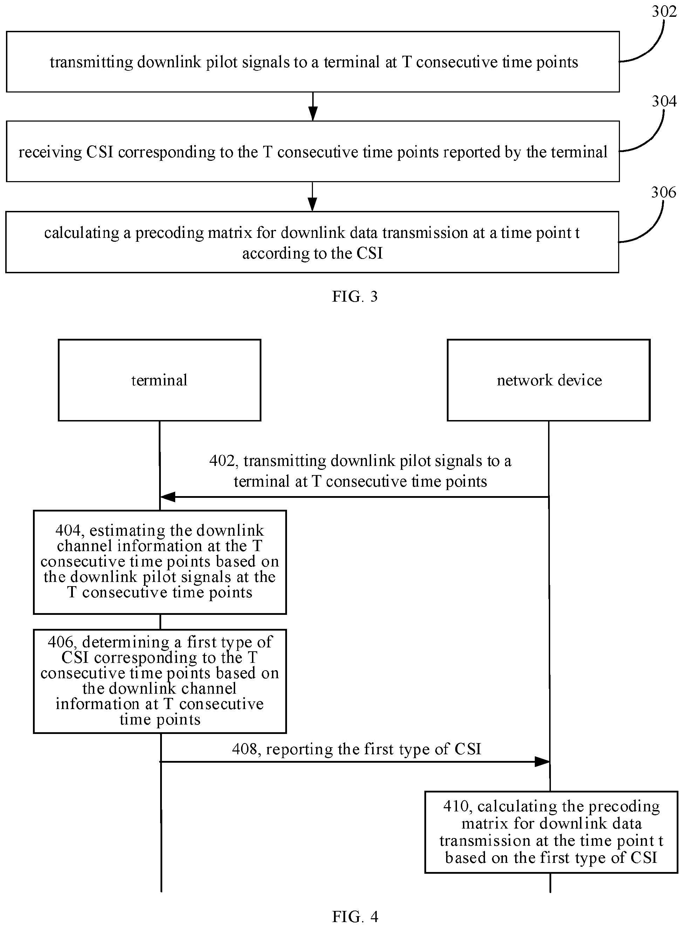

FIG. 3 shows a flow chart of a method for determining a precoding matrix provided by an embodiment of the present disclosure. This method can be performed by the network device shown in FIG. 1. The method includes the followings.

Step 302, downlink pilot signals are sent to a terminal at T consecutive time points.

The downlink pilot signals are used by the terminal to determine downlink channel information. T is a positive integer. Optionally, the downlink pilot signal includes at least one of the following:

·a CSI-RS;
·a DMRS; or
·a combination of the CSI-RS and the DMRS.

Optionally, the above parameter T is determined in at least one of the following ways:

·being configured by the network device; or
·being predefined through negotiation between the terminal device and the network device.

Step 304, CSI corresponding to the T consecutive time points reported by the terminal are received.

The CSI is determined by the terminal based on the downlink pilot signals. The terminal may estimate downlink channel information at the T consecutive time points based on the downlink pilot signals at the T consecutive time points. Then, the CSI corresponding to the T consecutive time points are determined based on the downlink channel information at the T consecutive time points. Optionally, information in the CSI includes the following two situations.

**First situation**

The CSI includes at least one of the following:

·spatial domain beam component indication information;
·frequency domain delay component indication information;
·time domain Doppler component indication information; or
·combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal. The parameter L, parameter $M_v$ and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, the time domain Doppler component meets at least one of the following conditions:

·time domain Doppler components corresponding to different polarization directions are the same or different;
·time domain Doppler components corresponding to different spatial-frequency components are the same or different; or
·time domain Doppler components corresponding to different time-frequency components are the same or different.

The spatial-frequency component is composed of the spatial domain beam component and the frequency domain delay component. The time-frequency component is composed of the frequency domain delay and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals; or the time domain Doppler component is represented by a basis vector.

Optionally, the time domain Doppler component is represented by a basis vector, and the basis vector includes at least one of:

·a DFT basis vector;
·a DCT basis vector; or
·a polynomial basis vector.

**Second situation**

The CSI includes at least one of the following:

·spatial domain beam component indication information;
·frequency domain delay component indication information; or
·combination coefficient indication information.

The spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and $M_v$ are positive integers. For example, one non-zero coefficient can correspond to one beam, and the same information on the positions of non-zero coefficients indicates that the same beam is used.

Optionally, the spatial domain beam components and the frequency domain delay components can be represented by DFT basis vectors.

Step 306, a precoding matrix for downlink data transmission at a time point t is determined based on the CSI.

The time point t is after the T consecutive time points. Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

The network device may use the above time domain Doppler component in the process of calculating the precoding matrix for downlink data transmission at the time point t based on the CSI. Optionally, for the above first situation of the CSI, the time domain Doppler component is determined by the terminal. For the above second situation of the CSI, the time domain Doppler component is determined by the network device.

In conclusion, with the method provided in the embodiments, the terminal determines the CSI according to the downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents terminal from frequently reporting the CSI due to rapid movement, reduces a period for the terminal to report the CSI, and reduces the uplink feedback overhead of the terminal.

With the method provided by embodiments of the present disclosure, enhanced design of the CSI reporting process can be realized, so that the time domain Doppler component is used for determining the precoding matrix for downlink data transmission. By using the Doppler information of the channel (time domain Doppler component), the correlation in the time domain of the channel information can be taken into account. Using the time domain Doppler component to determine the precoding matrix enables the network device to calculate the precoding matrices at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. The time domain Doppler component can be represented by the phase offset between adjacent time points for the network device transmitting the downlink pilot signals, or it can also be represented by the basis vector. Moreover, the time domain Doppler component can be determined by the terminal or by the network device. The method provided by the disclosure is introduced below through three embodiments.

**1. For the situation where the time domain Doppler component is represented by a phase offset and the terminal determines the time domain Doppler component**

FIG. 4 shows a flow chart of a method for determining a precoding matrix provided by an embodiment of the present disclosure. This method can be applied to the system shown in FIG. 1. The method includes the followings.

Step 402, a network device transmits downlink pilot signals to a terminal at T consecutive time points.

The downlink pilot signals are used by the terminal to determine downlink channel information. T is a positive integer. Optionally, the downlink pilot signal includes at least one of the following:

·a CSI-RS;
·a DMRS; or
·a combination of the CSI-RS and the DMRS.

Optionally, the above parameter T is determined in at least one of the following ways:

·being configured by the network device; or
·being predefined through negotiation between the terminal device and the network device.

Step 404, the terminal estimates the downlink channel information at the T consecutive time points based on the downlink pilot signals at the T consecutive time points.
Optionally, the terminal can estimate the downlink channel information at each of the T consecutive time points based on the downlink pilot signal at each of the T consecutive time points. The downlink channel information is information used to reflect characteristics of a downlink channel.
Step 406, the terminal determines a first type of CSI corresponding to the T consecutive time points based on the downlink channel information at T consecutive time points.
The network device can determine a precoding matrix for downlink data transmission based on the CSI determined by the terminal. The CSI can also be called codebook parameter information. Optionally, the CSI includes at least one of the following:

·spatial domain beam component indication information;
·frequency domain delay component indication information;
·time domain Doppler component indication information; or
·combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal. The parameter L, parameter $M_v$ and parameter K are positive integers. Optionally, the time domain Doppler component indication information is used to indicate K time domain basis vectors selected by the terminal, or K phase offsets. That is, the time domain Doppler component is represented by a phase offset or a basis vector.
Optionally, the spatial domain beam components and the frequency domain delay components can be represented by DFT basis vectors. Each of the above parameters L and $M_v$ is determined in at least one of the following ways:

·being configured by the network device;
·being predefined through negotiation between the terminal device and the network device; or
·being determined by the terminal according to the downlink channel information.

Optionally, the above parameter K is determined in at least one of the following ways:

·being configured by the network device;
·being predefined through negotiation between the terminal device and the network device; or
·being determined by the terminal according to the downlink channel information.

In a case where the terminal determines the parameter K according to the downlink channel information, the terminal reports the parameter K determined by the terminal to the network device.
Optionally, in the case where the parameter T and/or the parameter K are configured by the network device, the parameter T and/or the parameter K are configured for the terminal by the network device through at least one of the following signalings:

·a RRC signaling;
·a MAC-CE signaling; or
·DCI.

Optionally, the time domain Doppler component meets at least one of the following conditions:

·time domain Doppler components corresponding to different polarization directions are the same or different;
·time domain Doppler components corresponding to different spatial-frequency components are the same or different; or
·time domain Doppler components corresponding to different time-frequency components are the same or different.

The spatial-frequency component is composed of the spatial domain beam component and the frequency domain delay component. The time-frequency component is composed of the frequency domain delay and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals. In the case where the time domain Doppler component is represented by a phase offset, if the parameter K is determined by the terminal, the parameter K is determined by the terminal based on a number of non-zero coefficients for each transmission layer.

Optionally, the time domain Doppler component is represented by the phase offset, and an expression of the time domain Doppler component is:

$$\begin{bmatrix} e^{j\varphi_{1,1}} & \cdots & e^{j\varphi_{1,M_v}} \\ \vdots & \ddots & \vdots \\ e^{j\varphi_{2L,1}} & \cdots & e^{j\varphi_{1,M_v}} \end{bmatrix};$$

where, e represents a natural constant and j represents an imaginary number. $\varphi_{x,y}$ represents a phase offset value corresponding to an $x^{th}$ spatial domain beam component and a $y^{th}$ frequency domain delay component, the parameter L represents a number of the spatial domain beam components selected by the terminal, and the parameter $M_v$ represents a number of the frequency domain delay components selected by the terminal. The parameter L and the parameter $M_v$ are positive integers.

Optionally, in a case where the terminal reports the time domain Doppler component to the network device, the terminal reports the phase offset value corresponding to the $x^{th}$ spatial domain beam component and the $y^{th}$ frequency domain delay component that meets a following condition:
an amplitude of a combination coefficient corresponding to the $x^{th}$ spatial domain beam component and the $y^{th}$ frequency domain delay component being not 0.

Optionally, the terminal may report the strongest coefficient to the network device.

Step 408, the terminal reports the first type of CSI to the network device.

Optionally, the terminal reports all or part of the information in the CSI determined by the terminal to the network device. The CSI is used by network device to calculate the precoding matrix for downlink data transmission at the time point t, which is after the T consecutive time points. Optionally, when reporting the CSI, the terminal may quantify the information in the CSI.

Step 410, the network device calculates the precoding matrix for downlink data transmission at the time point t based on the first type of CSI.

Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

**For the situation where the network device calculates the precoding matrices at the T consecutive time points as the precoding matrix at the time point t**

There is a corresponding relationship between the time domain Doppler components and time points. Based on the CSI reported by the terminal, the network device can calculate the precoding matrix corresponding to each time point in the T consecutive time points through the following equation, and determines it as the precoding matrix for downlink data transmission at the time point t:

$$W = \sqrt{a} * W_1(\tilde{W}_2 \odot D)W_f^H;$$

where, $W_1$ represents a matrix composed of basis vectors corresponding to the spatial domain beam components, $\tilde{W}_2$

represents a matrix of the combination coefficients, $W_f$ represents a matrix composed of basis vectors corresponding to the frequency domain delay components, $\sqrt{a}$ represents a power normalization factor, and H represents a conjugate transpose of a matrix.

**For the situation where the network device directly calculates the precoding matrix at the time point t**

Optionally, the time intervals between adjacent time points in the T consecutive time points are equal, a time difference between the time point t and the first time point in the T consecutive time points is $\Delta t$, and $\Delta t$ is an integer multiple of the time interval between adjacent time points in the T consecutive time points. Based on the CSI reported by the terminal, the network device can directly calculate the precoding matrix for downlink data transmission at the time point t through the following equations:

$$W_t = \sqrt{f}\,W_1\big(\tilde{W}_2 \odot D'\big)W_f^{H};$$

$$D' = \begin{bmatrix} e^{j\Delta t\varphi_{1,1}} & \cdots & e^{j\Delta t\varphi_{1,M_v}} \\ \vdots & \ddots & \vdots \\ e^{j\Delta t\varphi_{2L,1}} & \cdots & e^{j\Delta t\varphi_{1,M_v}} \end{bmatrix};$$

where, $W_1$ represents a matrix composed of basis vectors corresponding to the spatial domain beam components, $\tilde{W}_2$ represents a matrix of the combination coefficients, $W_f$ represents a matrix composed of basis vectors corresponding to the frequency domain delay components, $\sqrt{f}$ represents a power normalization factor, and the parameter L represents the number of the spatial domain beam components selected by the terminal, the parameter $M_v$ represents the number of the frequency domain delay components selected by the terminal, H represents a conjugate transpose of a matrix, and the parameter L and the parameter $M_v$ are positive integers.

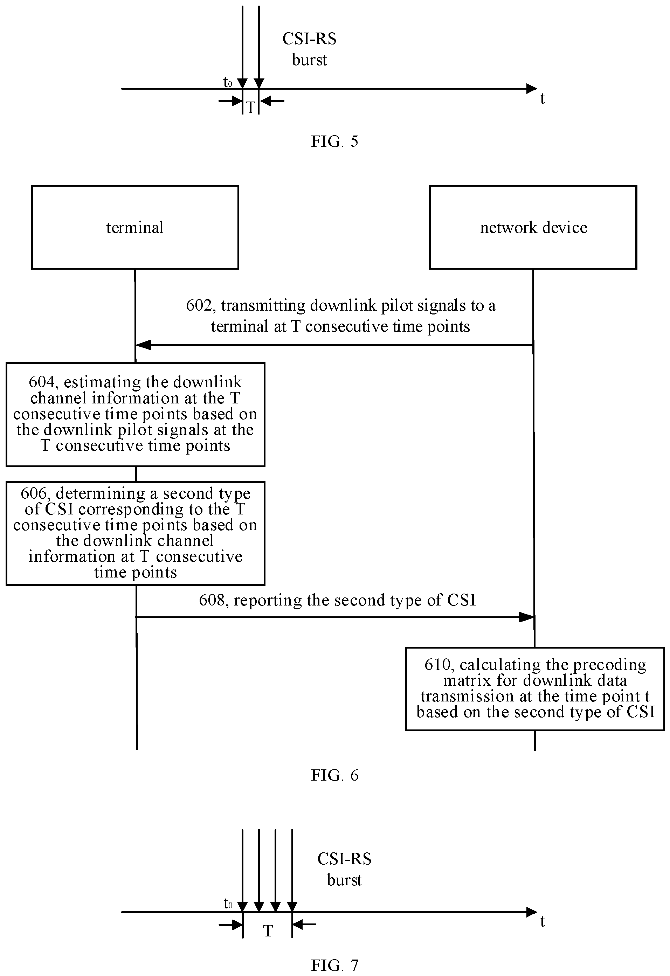

In a specific example, the method provided by the embodiment of the present disclosure is used to optimize the design of the R16 Type II codebook, and the time domain Doppler component is represented by a phase offset. For example, FIG. 5 is a schematic diagram of transmitting a CSI-RS provided by an embodiment of the present disclosure. As shown in FIG. 5, the downlink pilot signal used for downlink channel estimation is the CSI-RS. The gNB transmits the CSI-RS to the UE at T=2 consecutive time points, and defines the CSI-RS transmitted as a CSI-RS burst. For example, data is transmitted through one stream, that is, the transmission rank v=1, the number of transmitting antenna ports is $N_t$, and the number of PMI subbands is $N_3$. The gNB configures the codebook parameters to the UE through RRC signaling to determine that L=2, $M_v$ =1, and the number of non-zero coefficients is $K_0 = 4$.

The UE estimates downlink channel information at the two time points based on the received CSI-RS burst. For example, a SD basis vector and a FD basis vector calculated by the UE based on the channel information at the first time point are $W_1 \in \mathbb{C}^{N_t \times 4}$ and $W_f \in \mathbb{C}^{N_3 \times 2}$. The UE uses $W_1$ and $W_f$ to calculate a matrix of combination coefficients

$$\tilde{W}_{2,t_0} = \begin{bmatrix} 0 & c_{1,2,t_0} \\ c_{2,1,t_0} & c_{2,2,t_0} \\ 0 & 0 \\ c_{4,1,t_0} & 0 \end{bmatrix}$$ based on downlink information at the first time point (the first time point, i.e., time point $t_0$), where $c_{2,1,t_0}$, $c_{4,1,t_0}$, $c_{1,2,t_0}$, and $c_{2,2,t_0}$ are complex numbers, and their amplitudes are greater than 0. The UE then uses the

same $W_1$ and $W_f$ to calculate a matrix of combination coefficients $$\tilde{W}_{2,t_0+1} = \begin{bmatrix} 0 & c_{1,2,t_0+1} \\ c_{2,1,t_0+1} & c_{2,2,t_0+1} \\ 0 & 0 \\ c_{4,1,t_0+1} & 0 \end{bmatrix}$$ based on downlink information at the second time point (the second time point, that is, time point $t_0 + 1$) in the two time points, and calculate the time domain Doppler component $$D = \begin{bmatrix} 0 & e^{j\varphi_{1,2}} \\ e^{j\varphi_{2,1}} & e^{j\varphi_{2,2}} \\ 0 & 0 \\ e^{j\varphi_{4,1}} & 0 \end{bmatrix}$$, where $\varphi_{x,y} = c_{x,y,t_0+1}/c_{x,y,t_0}$. The UE reports

indication information of the $W_1$ and $W_f$ (used to indicate the $W_1$ and $W_f$ to the gNB), quantized matrices of combination coefficients and a quantized time domain Doppler component D to the gNB. The gNB calculates precoding matrices at the time point $t_0$ and time point $t_0 + 1$ respectively through $W = \sqrt{a} * W_1 \widetilde{W}_2 W_f^H$ and

$$W = \sqrt{b} * W_1 (\widetilde{W}_2 \odot D) W_f^H$$

. The precoding matrices can be used as the precoding matrix for downlink data transmission at time point t after the T consecutive time points. The gNB can also calculate the precoding matrix at the time point t through $W_t = \sqrt{c} W_1 (\widetilde{W}_2 \odot D') W_f^H$, where

$$D' = \begin{bmatrix} 0 & e^{j\Delta t \varphi_{1,2}} \\ e^{j\Delta t \varphi_{2,1}} & e^{j\Delta t \varphi_{2,2}} \\ 0 & 0 \\ e^{j\Delta t \varphi_{4,1}} & 0 \end{bmatrix}$$

, and $\sqrt{a}$, $\sqrt{b}$, and $\sqrt{c}$, represent power normalization factors. $\Delta t$ is a relative time difference between the time point t and the time point t0, and $\Delta t$ is an integer multiple of a relative time difference between the time point $t_0$ and the time point $t_0 + 1$.

In summary, with the method provided in this embodiment, the terminal determines the time domain Doppler component based on the downlink pilot signals at the T consecutive time points, which can take the correlation of the channel information in the time domain into consideration in the process of determining the CSI. The network device uses the time domain Doppler component to determine the precoding matrix, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. In addition, determining the time domain Doppler component represented by the phase offset provides a way to determine the time domain Doppler component.

**2. For the situation where the time domain Doppler component is represented by a basis vector and the terminal determines the time domain Doppler component**

FIG. 6 shows a flow chart of a method for determining a precoding matrix provided by an embodiment of the present disclosure. This method can be applied to the system shown in FIG. 1. The method includes the followings.

Step 602, a network device transmits downlink pilot signals to a terminal at T consecutive time points.

The downlink pilot signals are used by the terminal to determine downlink channel information. T is a positive integer. Optionally, the downlink pilot signal includes at least one of the following:

· a CSI-RS;
· a DMRS; or
· a combination of the CSI-RS and the DMRS.

Optionally, the above parameter T is determined in at least one of the following ways:

· being configured by the network device; or
· being predefined through negotiation between the terminal device and the network device.

Step 604, the terminal estimates the downlink channel information at the T consecutive time points based on the downlink pilot signals at the T consecutive time points.

Optionally, the terminal can estimate the downlink channel information at each of the T consecutive time points based on the downlink pilot signal at each of the T consecutive time points. The downlink channel information is information used to reflect the characteristics of the downlink channel.

Step 606, the terminal determines a second type of CSI corresponding to the T consecutive time points based on the downlink channel information at the T consecutive time points.

The network device can determine the precoding matrix for downlink data transmission based on the CSI determined by the terminal. CSI can also be called codebook parameter information. Optionally, the CSI includes at least one of the following information:

· spatial domain beam component indication information;
· frequency domain delay component indication information;
· time domain Doppler component indication information; or
· combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal. The parameter L, parameter $M_v$ and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, the spatial domain beam components and the frequency domain delay components can be represented by DFT basis vectors. Each of the above parameters L and M is determined in at least one of the following ways:

·being configured by the network device;
·being predefined through negotiation between the terminal device and the network device; or
·being determined by the terminal according to the downlink channel information.

Optionally, the above parameter K is determined in at least one of the following ways:

·being configured by the network device;
·being predefined through negotiation between the terminal device and the network device; or
·being determined by the terminal according to the downlink channel information.

In a case where the terminal determines the parameter K according to the downlink channel information, the terminal reports the parameter K determined by the terminal to the network device.

Optionally, in the case where the parameter T and/or the parameter K are configured by the network device, the parameter T and/or the parameter K are configured for the terminal by the network device through at least one of the following signalings:

·a RRC signaling;
·a MAC-CE signaling; or
·DCI.

Optionally, the time domain Doppler component meets at least one of the following conditions:

·time domain Doppler components corresponding to different polarization directions are the same or different;
·time domain Doppler components corresponding to different spatial-frequency components are the same or different; or
·time domain Doppler components corresponding to different time-frequency components are the same or different.

The spatial-frequency component is composed of the spatial domain beam component and the frequency domain delay component. The time-frequency component is composed of the frequency domain delay and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a basis vector. The basis vector includes at least one of:

·a DFT basis vector;
·a DCT basis vector; or
·a polynomial basis vector.

Optionally, by introducing parameter $O_3$, oversampling expansion can be performed on the time domain Doppler component to obtain more basis vector information.

Optionally, the time domain Doppler component is represented by a basis vector. An expression of the time domain Doppler component is as follows:

$$W_d = [f_{d,1} \quad \cdots \quad f_{d,K}];$$

where, K basis vectors in the $W_d$ are selected by the terminal from candidate basis vectors; or, the K basis vectors in the $W_d$ are fixed or predefined basis vectors. Optionally, the terminal indicates the selected K time domain Doppler components to the network device through combining coefficients or bitmaps.

Step 608, the terminal reports the second type of CSI to the network device.

Optionally, the terminal may report all or part of the information in the CSI determined by the terminal to the network device. The CSI is used by network device to calculate the precoding matrix for downlink data transmission at the time point t, which is after the T consecutive time points. Optionally, when reporting the CSI, the terminal quantifies the information in the CSI.

Step 610, the network device calculates the precoding matrix for downlink data transmission at the time point t based on the second type of CSI.

Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

**For the situation where the network device calculates the precoding matrix at the T consecutive time points as the precoding matrix at the time point t**

There is a correspondence between the time domain Doppler component and time points. Based on the CSI reported by the terminal, the network device can calculate the precoding matrix corresponding to each time point in the T consecutive time points through at least one of the following equations, and determines it as the precoding for downlink data transmission at the time point t matrix:

$$W = \sqrt{b}(W_f^* \otimes W_1)\widetilde{\widetilde{W}}_2 W_d^H;$$

$$W = \sqrt{c}W_1\widetilde{\widetilde{W}}_2(W_d \otimes W_f)^H;$$

where, $W_1$ represents a matrix composed of basis vectors corresponding to the spatial domain beam components, $\widetilde{\widetilde{W}}_2$ represents a matrix of the combination coefficients, $W_f$ represents a matrix composed of basis vectors corresponding to the frequency domain delay components, $\sqrt{b}$ and $\sqrt{c}$ represents power normalization factors, and H represents a conjugate transpose of a matrix.

**For the situation where the network device directly calculates the precoding matrix at the time point t**

Optionally, the time domain Doppler component is represented by a DFT basis vector. The time intervals between adjacent time points in the T consecutive time points are equal, t=T+n, which indicates that the time point t is after the last time point in the T time points, with a time interval from the last time point in the T time points being n times of a target time interval. The target time interval is the time interval between adjacent time points in the T consecutive time points, and n is a positive integer. Based on the CSI reported by the terminal, the network device can directly calculate the precoding matrix for downlink data transmission at the time point t through at least one of the following equations:

$$W_t = \sqrt{d}(W_f^* \otimes W_1)\widetilde{\widetilde{W}}_2 \begin{bmatrix} f_{d,1}((t-T) \bmod T)e^{j\frac{2\pi k_1 \left\lfloor \frac{t-T}{T}\right\rfloor + 1}{O_3}} \\ \vdots \\ f_{d,K}((t-T) \bmod T)e^{j\frac{2\pi k_K \left\lfloor \frac{t-T}{T}\right\rfloor + 1}{O_3}} \end{bmatrix}^H;$$

$$W_t = \sqrt{e}\, W_1 \widetilde{\widetilde{W}}_2 \left( \begin{bmatrix} f_{d,1}((t-T)\bmod T)e^{j\frac{2\pi k_1 \left\lfloor \frac{t-T}{T} \right\rfloor + 1}{O_3}} \\ \vdots \\ f_{d,K}((t-T)\bmod T)e^{j\frac{2\pi k_K \left\lfloor \frac{t-T}{T} \right\rfloor + 1}{O_3}} \end{bmatrix} \otimes W_f \right)^H ;$$

where, $W_1$ represents a matrix composed of basis vectors corresponding to the spatial domain beam components, $\widetilde{\widetilde{W}}_2$ represents a matrix of the combination coefficients, $W_f$ represents a matrix composed of basis vectors corresponding to the frequency domain delay components, $f_{d,k}(T)$ represents elements in a $T^{th}$ row of the DFT basis vector, $k_K$ represents an index value of a $K^{th}$ DFT basis vector, $\sqrt{d}$ and $\sqrt{e}$ represent power normalization factors, $O_3$ represents an oversampling factor, and H represents a conjugate transpose of a matrix.

In a specific example, the method provided by the embodiment of the present disclosure is used to optimize the design of the R16 Type II codebook, and the time domain Doppler component is represented by a basis vector. For example, FIG. 7 is a schematic diagram of transmitting a CSI-RS provided by an embodiment of the present disclosure. As shown in FIG. 7, the pilot signal used for downlink channel estimation is the CSI-RS. The gNB transmits CSI-RS bursts to the UE at T=4 consecutive time points. For example, data is transmitted through one stream, that is, the transmission rank $v=1$, the number of transmitting antenna ports $N_t = 16$, and the number of PMI subbands is $N_3$. The gNB configures the codebook parameters to the UE through RRC signaling to determine that L=2, $M_v$ =2, and the number of reported combination coefficients is $K_0 = 8$. The time domain Doppler component is represented by K=2 DFT basis vectors, and oversampling is not performed on the basis vector of the time domain Doppler component, that is, the parameter $O_3$ corresponding to the DFT basis vector is 1.

The UE estimates the downlink channel information at these four time points based on the received CSI-RS bursts. For example, if a SD basis vector and a FD basis vector calculated by the UE based on the channel information at the first time point (the first time point, i.e., time point $t_0$) in the four time points is $W_1 \in \mathbb{C}^{N_t \times 4}$ and $W_f \in \mathbb{C}^{N_3 \times 2}$ respectively, and $W_f$ is represented by M=2 FD basis vectors. The UE uses $W_1$ and $W_f$ to calculate a matrix of combination coefficients $\widetilde{\widetilde{W}}_{2,t_0} = \begin{bmatrix} c_{1,1,t_0} & c_{1,2,t_0} \\ c_{2,1,t_0} & c_{2,2,t_0} \\ c_{3,1,t_0} & c_{3,2,t_0} \\ c_{4,1,t_0} & c_{4,2,t_0} \end{bmatrix}$ based on the downlink information at the first time point. Similarly, the UE uses the same $W_1$ and $W_f$ to calculate matrices of combination coefficients $\widetilde{\widetilde{W}}_{2,t_0+1}$, $\widetilde{\widetilde{W}}_{2,t_0+2}$, and $\widetilde{\widetilde{W}}_{2,t_0+3}$, corresponding to the remaining three time points except the first time point. $\widetilde{\widetilde{W}}_{2,t_0}$ is represented by defining $v_{t_0} = [c_{1,1,t_0}$ $c_{1,2,t_0}$ $c_{2,1,t_0}$ $\cdots$ $c_{4,1,t_0}$ $c_{4,2,t_0}]^T$. In the same way, $v_{t_0+1}$, $v_{t_0+2}$, and $v_{t_0+3}$ can be obtained correspondingly. $V = \begin{bmatrix} v_{t_0}^T & \cdots & v_{t_0+3}^T \end{bmatrix}$, then the time domain Doppler component $W_d = [f_{d,1} \quad \cdots \quad f_{d,K}] \in \mathbb{C}^{T \times K}$ can be calculated based on $\max_{f_{d,k}} \|V f_{d,k}\|_2$. The UE can determine the matrix of combination coefficients $\widetilde{\widetilde{W}}_2 \in \mathbb{C}^{8 \times 2}$ according to the downlink channel information at the T consecutive time points and $W_1$, $W_f$, and $W_d$, and then $K_0 = 8$ non-zero coefficients are selected to report. The UE reports indication information of $W_1$ and $W_f$, quantized matrices of combination coefficients and the time domain Doppler component $W_d$ to the gNB. The gNB can calculate the precoding matrix corresponding to each time point in the T consecutive time points through $W = \sqrt{b}(W_f^* \otimes W_1)\widetilde{\widetilde{W}}_2 W_d^H$. The precoding matrices can be used as the precoding matrix for downlink data transmission at the time point t after the T consecutive time points. The gNB can also calculate the precoding matrix at the time point t through $W_t =$

$$\sqrt{d}(W_f^* \otimes W_1)\widetilde{\widetilde{W}}_2 \begin{bmatrix} f_{d,1}((t-T) \bmod T)e^{j\frac{2\pi k_1\left\lfloor \frac{t-T}{T}\right\rfloor+1}{O_3}} \\ \vdots \\ f_{d,K}((t-T) \bmod T)e^{j\frac{2\pi k_K\left\lfloor \frac{t-T}{T}\right\rfloor+1}{O_3}} \end{bmatrix}^H$$

, where, t=T+n means that the time point t is after the last time point in the T time points, with a time interval from the last time point in the T time points being n times of a target time interval. The target time interval is the time interval between adjacent time points in the T consecutive time points. The $f_{d,k}(T)$ represents the elements corresponding to the $T^{th}$ row of the basis vector.

In summary, with the method provided in this embodiment, the terminal determines the time domain Doppler component based on the downlink pilot signals at the T consecutive time points, which can take the correlation of the channel information in the time domain into consideration in the process of determining the CSI. The network device uses the time domain Doppler component to determine the precoding matrix, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. In addition, determining the time domain Doppler component represented by the basis vector provides a way to determine the time domain Doppler component.

### 3. For the situation where the time domain Doppler is determined by the network device

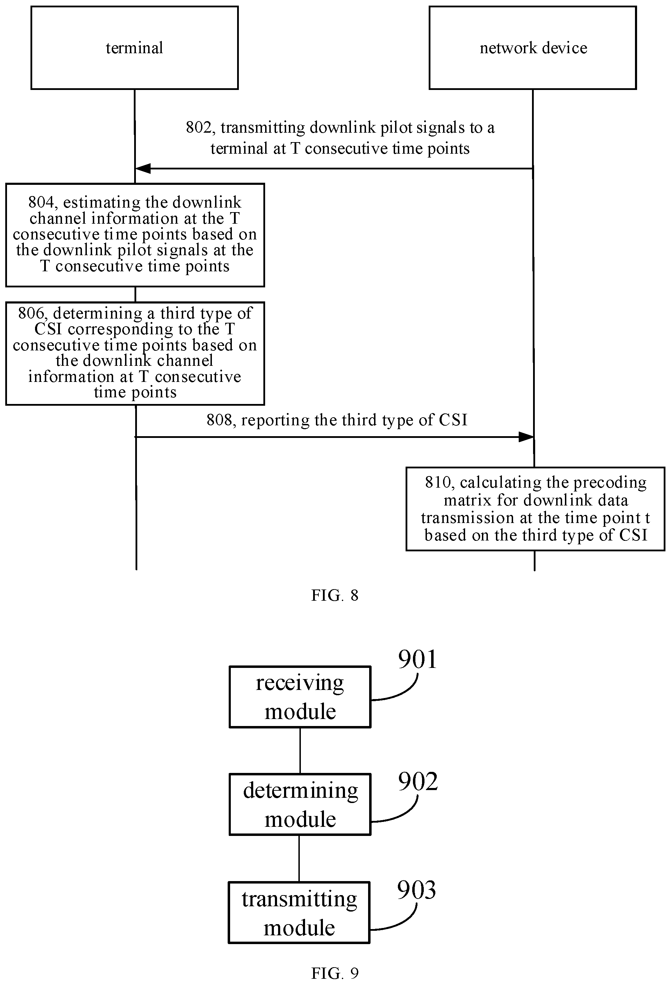

FIG. 8 shows a flow chart of a method for determining a precoding matrix provided by an embodiment of the present disclosure. This method can be applied to the system shown in FIG. 1. The method includes the followings.

Step 802, a network device transmits downlink pilot signals to a terminal at T consecutive time points.

The downlink pilot signals are used by the terminal to determine downlink channel information. T is a positive integer. Optionally, the downlink pilot signal includes at least one of the following:

· a CSI-RS;
· a DMRS; or
· a combination of the CSI-RS and the DMRS.

Optionally, the above parameter T is determined in at least one of the following ways:

· being configured by the network device; or
· being predefined through negotiation between the terminal device and the network device.

Step 804, the terminal estimates the downlink channel information at the T consecutive time points based on the downlink pilot signals at the T consecutive time points.

Optionally, the terminal can estimate the downlink channel information at each of the T consecutive time points based on the downlink pilot signal at each of the T consecutive time points. The downlink channel information is information used to reflect the characteristics of the downlink channel.

Step 806, the terminal determines a third type of CSI corresponding to the T consecutive time points based on the downlink channel information at the T consecutive time points.

The network device can determine the precoding matrix for downlink data transmission based on the CSI determined by the terminal. CSI can also be called codebook parameter information. Optionally, the CSI includes at least one of the following information:

· spatial domain beam component indication information;
· frequency domain delay component indication information; or
· combination coefficient indication information.

The spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and the parameter $M_v$ are positive integers. For example, one non-zero coefficient can correspond to one beam, and the same information on the positions of non-zero coefficients indicates that the same beam is used.

Optionally, the spatial domain beam components and the frequency domain delay components can be of the following ways:

·being configured by the network device;
·being predefined through negotiation between the terminal device and the network device; or
·being determined by the terminal according to the downlink channel information.

Optionally, in the case where the parameter T is configured by the network device, the parameter T is configured for the terminal by the network device through at least one of the following signalings:

·a RRC signaling;
·a MAC-CE signaling; or
·DCI.

Step 808, the terminal reports the third type of CSI to the network device.

Optionally, the terminal may report all or part of the information in the CSI determined by the terminal to the network device. The CSI is used by network device to calculate the precoding matrix for downlink data transmission at the time point t, which is after the T consecutive time points. Optionally, when reporting the CSI, the terminal quantifies the information in the CSI.

Step 810, the network device calculates the precoding matrix for downlink data transmission at the time point t based on the third type of CSI.

Optionally, the network device calculates the precoding matrix for downlink data transmission at each of the T consecutive time points according to the CSI reported by the terminal as the precoding matrix at the time point t. Optionally, the network device can calculate the precoding matrix for downlink data transmission at the time point t according to the CSI reported by the terminal through at least one of the following equations:

$$W = \sqrt{a} * W_1 \left( \widetilde{W}_2 \odot D \right) W_f^H;$$

$$W = \sqrt{b} (W_f^* \otimes W_1) \widetilde{W}_2 W_d^H;$$

$$W = \sqrt{c} W_1 \widetilde{\widetilde{W}}_2 (W_d \otimes W_f)^H;$$

where, $W_1$ represents a matrix composed of basis vectors corresponding to the spatial domain beam components, $\widetilde{W}_2$ and $\widetilde{\widetilde{W}}_2$ represent matrices composed of the combination coefficients, $W_f$ represents a matrix composed of basis vectors corresponding to the frequency domain delay components, D includes time domain Doppler components represented by the phase offset between adjacent time points for transmitting the downlink pilot signals, $W_d$ includes the time domain Doppler components represented by the basis vectors, D, $\widetilde{W}_2$, $\widetilde{\widetilde{W}}_2$ and $W_d^H$ are determined according to T groups of combination coefficients by the netword device, $\sqrt{a}$, $\sqrt{b}$ and $\sqrt{c}$ represents power normalization factors, and H represents a conjugate transpose of a matrix.

In conclusion, with the method provided by this embodiment, the terminal determines the T groups of combination coefficients based on the downlink pilot signals at the T consecutive time points, and reports the CSI to the network device, which can take the correlation of the channel information in the time domain into consideration in the process of determining the CSI. The network device determines the precoding matrix by determining the time domain Doppler component, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. In addition, by allowing the network device to determine the time domain Doppler component, the uplink feedback overhead of the terminal can be further reduced.

It should be noted that the sequence of the method steps provided by the embodiments of the present disclosure can be adjusted appropriately, and the steps can also be added or deleted accordingly according to the situation. Changed methods that can be easily found within the technical scope disclosed in the present disclosure by those skilled in the art should be included in the scope of protection of this disclosure, and therefore will not be repeated.

FIG. 9 shows a block diagram of an apparatus for reporting CSI provided by an embodiment of the present disclosure. As shown in FIG. 9, the device includes:

a receiving module 901, configured to receive downlink pilot signals sent by a network device at T consecutive time points;

a determining module 902, configured to estimate downlink channel information at the T consecutive time points according to the downlink pilot signals at the T consecutive time points;

the determining module 902 is also configured to determine CSI corresponding to the T consecutive time points according to the downlink channel information at the T consecutive time points; and

a transmitting module 903, configured to report the CSI to the network device.

The CSI is used by the network device to determine a precoding matrix for downlink data transmission at a time point t, in which the time point t is after the T consecutive time points, and T is a positive integer.

In an optional design, the CSI includes at least one of:

spatial domain beam component indication information;

frequency domain delay component indication information;

time domain Doppler component indication information; or

combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal, in which the parameter L, the parameter $M_v$ and the parameter K are positive integers.

In an optional design, the CSI includes at least one of the following information:

spatial domain beam component indication information;

frequency domain delay component indication information; or

combination coefficient indication information.

The spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal, in which information on non-zero coefficient positions in matrices of the T groups of combination coefficients are the same, and the parameter L and the parameter $M_v$ are positive integers.

In an optional design, the parameter K is determined in at least one of the following ways:

being configured by the network device;

being predefined through negotiation between the terminal device and the network device; or

being determined by the terminal according to the downlink channel information.

In an optional design, the transmitting module 903is used to:

in a case where the terminal determines the parameter K according to the downlink channel information, report the parameter K determined by the terminal to the network device.

In an optional design, the time domain Doppler component is represented by a phase offset between adjacent time points for transmitting the downlink pilot signals; or, the time domain Doppler component is represented by a basis vector.

In an optional design, in a case where the time domain Doppler component is represented by the phase offset, the parameter K is determined by the terminal according to a number of non-zero coefficients for each transmission layer.

In an optional design, the time domain Doppler component meets at least one of following conditions:

time domain Doppler components corresponding to different polarization directions are the same or different;

time domain Doppler components corresponding to different spatial-frequency components are the same or different; or

time domain Doppler components corresponding to different time-frequency components are the same or different.

The spatial-frequency component is composed of the spatial domain beam component and the frequency domain delay component. The time-frequency component is composed of the frequency domain delay component and the time domain Doppler component.

In an optional design, in a case where the downlink data transmission is multi-layer transmission, time domain Doppler components corresponding to different transmission layers are the same or different.

In an optional design, the time domain Doppler component is represented by the phase offset. The expression of the time domain Doppler component is as follows:

$$D = \begin{bmatrix} e^{j\varphi_{1,1}} & \cdots & e^{j\varphi_{1,M_v}} \\ \vdots & \ddots & \vdots \\ e^{j\varphi_{2L,1}} & \cdots & e^{j\varphi_{1,M_v}} \end{bmatrix};$$

where, $\varphi_{x,y}$ represents a phase offset value corresponding to an $x^{th}$ spatial domain beam component and a $y^{th}$ frequency domain delay component, the parameter L represents a number of the spatial domain beam components selected by the terminal, and the parameter $M_v$ represents a number of the frequency domain delay components selected by the terminal, and in which the parameter L and the parameter $M_v$ are positive integers.

In an optional design, the transmitting module 903 is used to:

in a case of reporting the time domain Doppler component to the network device, report the phase offset value corresponding to the $x^{th}$ spatial domain beam component and the $y^{th}$ frequency domain delay component that meets a following condition:

an amplitude of a combination coefficient corresponding to the $x^{th}$ spatial domain beam component and the $y^{th}$ frequency domain delay component being not 0.

In an optional design, the time domain Doppler component is represented by the basis vector, and the expression of the time domain Doppler component is as follows:

$$W_d = [f_{d,1} \quad \cdots \quad f_{d,K}];$$

where, K basis vectors in the $W_d$ are selected by the terminal from candidate basis vectors; or, the K basis vectors in the $W_d$ are fixed or predefined basis vectors.

In an optional design, the time domain Doppler component is represented by a basis vector, and the basis vector includes at least one of the following:

a DFT basis vector;
a DCT basis vector; or
a polynomial basis vectors.

In an optional design, the parameter T is determined in at least one of the following ways:

being configured by the network device; or
being predefined through negotiation between the terminal device and the network device.

In an optional design, in a case where the parameter T and/or the parameter K are configured by the network device, the parameter T and/or the parameter K are configured for the terminal by the network device through at least one of following signalings:

a RRC signaling;
a MAC-CE signaling; or
DCI.

In an optional design, the downlink pilot signal includes at least one of the following:

a CSI-RS;
a DMRS; or
a combination of CSI-RS and DMRS.

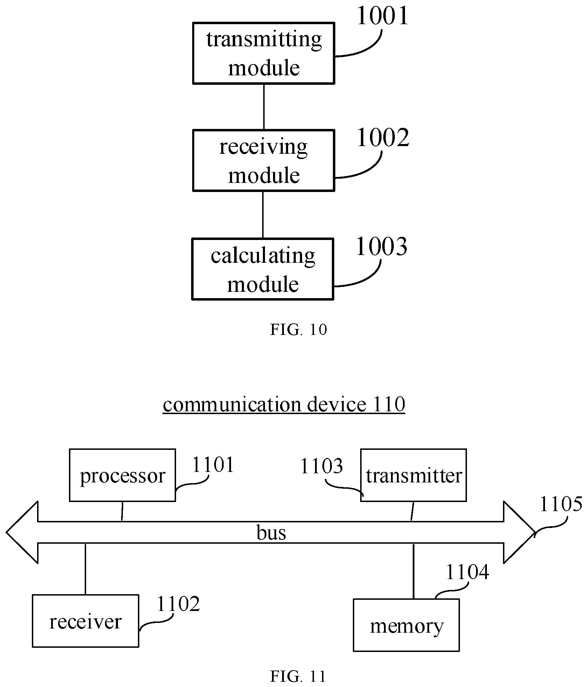

FIG. 10 shows a block diagram of a device for determining a precoding matrix provided by an embodiment of the present disclosure. As shown in FIG. 10, the device includes:

a transmitting module 1001, configured to transmit downlink pilot signals to a terminal at T consecutive time points;
a receiving module 1002, configured to receive CSI corresponding to the T consecutive time points reported by the terminal;
a calculating module 1003, configured to calculate a precoding matrix for downlink data transmission at a time point t according to the CSI.

The CSI is determined by the terminal according to the downlink pilot signals, and the time point t is after the T consecutive time points, and T is a positive integer.

In an optional design, the CSI includes at least one of the following information:

spatial domain beam component indication information;
frequency domain delay component indication information;
time domain Doppler component indication information; or
combination coefficient indication information.

The spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal, in which the parameter L, the parameter $M_v$ and the parameter K are positive integers.

In an optional design, the CSI includes at least one of the following information:

spatial domain beam component indication information;
frequency domain delay component indication information; or
combination coefficient indication information;

The spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal, in which information on non-zero coefficient positions in matrices of the T groups of combination coefficients are the same, and the parameter L and the parameter $M_v$ are positive integers.

In an optional design, the time domain Doppler component is represented by a phase offset between adjacent time points for transmitting the downlink pilot signals; or the time domain Doppler component is represented by a basis vector.

In an optional design, the time domain Doppler component is represented by a phase offset. The expression of the time domain Doppler component is as follows:

$$D = \begin{bmatrix} e^{j\varphi_{1,1}} & \cdots & e^{j\varphi_{1,M_v}} \\ \vdots & \ddots & \vdots \\ e^{j\varphi_{2L,1}} & \cdots & e^{j\varphi_{1,M_v}} \end{bmatrix};$$

in which, $\varphi_{x,y}$ represents a phase offset value corresponding to an $x^{th}$ spatial domain beam component and a $y^{th}$ frequency domain delay component, the parameter L represents a number of the spatial domain beam components selected by the terminal, and the parameter $M_v$ represents a number of the frequency domain delay components selected by the terminal. The parameter L and the parameter $M_v$ are positive integers.

In an optional design, the time domain Doppler component is represented by a basis vector, and the expression of the time domain Doppler component is as follows:

$$W_d = [f_{d,1} \quad \cdots \quad f_{d,K}];$$

in which, K basis vectors in the $W_d$ are selected by the terminal from candidate basis vectors; or, the K basis vectors in the $W_d$ are fixed or predefined basis vectors.

In an optional design, the calculating module 1003 is configured to:

determine the precoding matrix for downlink data transmission at the time point t according to the CSI by a following equation:

$$W = \sqrt{a} * W_1\left(\tilde{W}_2 \odot D\right)W_f^H;$$

in which, $W_1$ represents a matrix composed of basis vectors corresponding to the spatial domain beam components, $\tilde{W}_2$ represents a matrix composed of the combination coefficients, $W_f$ represents a matrix composed of basis vectors corresponding to the frequency domain delay components, $\sqrt{a}$ represents a power normalization factor, and H represents a conjugate transpose of a matrix.

In an optional design, the calculating module 1003 is configured to:

determine the precoding matrix for downlink data transmission at the time point t according to the CSI by at least one of following equations:

$$W = \sqrt{b}(W_f^* \otimes W_1)\tilde{\tilde{W}}_2 W_d^H;$$

$$W = \sqrt{c}W_1\tilde{\tilde{W}}_2(W_d \otimes W_f)^H;$$

in which, $W_1$ represents a matrix composed of basis vectors corresponding to the spatial domain beam components, $\tilde{\tilde{W}}_2$ represents a matrix composed of the combination coefficients, $W_f$ represents a matrix composed of basis vectors corresponding to the frequency domain delay components, $\sqrt{b}$ and $\sqrt{c}$ represents power normalization factors, and H represents a conjugate transpose of a matrix.

In an optional design, the calculating module 1003 is configured to:

determine the precoding matrix for downlink data transmission at the time point t according to the CSI by at least one of following equations:

$$W = \sqrt{a} * W_1\left(\tilde{W}_2 \odot D\right)W_f^H;$$

$$W = \sqrt{b}(W_f^* \otimes W_1)\tilde{\tilde{W}}_2 W_d^H;$$

$$W = \sqrt{c}W_1\tilde{\tilde{W}}_2(W_d \otimes W_f)^H;$$

in which, $W_1$ represents a matrix composed of basis vectors corresponding to the spatial domain beam components, $\tilde{W}_2$ and $\tilde{\tilde{W}}_2$ represent matrices composed of the combination coefficients, $W_f$ represents a matrix composed of basis vectors corresponding to the frequency domain delay components, D includes time domain Doppler components represented by the phase offset between adjacent time points for transmitting the downlink pilot signals, $W_d$ includes the time domain Doppler components represented by the basis vectors, D, $\tilde{W}_2$, $\tilde{\tilde{W}}_2$ and $W_d^H$ are determined according to T groups of combination coefficients, $\sqrt{a}$, $\sqrt{b}$ and $\sqrt{c}$ represents power normalization factors, and H represents a conjugate transpose of a matrix.

In an optional design, time intervals between adjacent time points in the T consecutive time points are equal, a time difference between the time point t and a first time point in the T consecutive time points is $\Delta t$, and $\Delta t$ is an integer

multiple of the time interval between adjacent time points in the T consecutive time points. The calculating module 1003 is configured to:

determine the precoding matrix for downlink data transmission at the time point t according to the CSI by following equations:

$$W_t = \sqrt{f} W_1 \big( \widetilde{W}_2 \odot D' \big) W_f^H;$$

$$D' = \begin{bmatrix} e^{j\Delta t\varphi_{1,1}} & \cdots & e^{j\Delta t\varphi_{1,M_v}} \\ \vdots & \ddots & \vdots \\ e^{j\Delta t\varphi_{2L,1}} & \cdots & e^{j\Delta t\varphi_{1,M_v}} \end{bmatrix};$$

in which, $W_1$ represents a matrix composed of basis vectors corresponding to the spatial domain beam components, $\widetilde{W}_2$ represents a matrix composed of the combination coefficients, $W_f$ represents a matrix composed of basis vectors corresponding to the frequency domain delay components, $\sqrt{f}$ represents a power normalization factor, and the parameter L represents the number of the spatial domain beam components selected by the terminal, the parameter $M_v$ represents the number of the frequency domain delay components selected by the terminal, the parameter L and the parameter $M_v$ are positive integers, and H represents a conjugate transpose of a matrix.

In an optional design, the time domain Doppler component is represented by a discrete Fourier transform (DFT) basis vector, and time intervals between adjacent time points in the T consecutive time points are equal, t=T+n, indicating that the time point t is a time point after a last time point in the T time points, with a time interval from the last time point in the T time points being n times of a target time interval. The target time interval is the time interval between adjacent time points in the T consecutive time points, and n is a positive integer. The calculating module 1003 is configured to:

determine the precoding matrix for downlink data transmission at the time point t according to the CSI by at least one of following equations:

$$W_t = \sqrt{d}(W_f^* \otimes W_1)\widetilde{\widetilde{W}}_2 \begin{bmatrix} f_{d,1}((t-T) \bmod T)e^{j\frac{2\pi k_1\left\lfloor\frac{t-T}{T}\right\rfloor+1}{O_3}} \\ \vdots \\ f_{d,K}((t-T) \bmod T)e^{j\frac{2\pi k_K\left\lfloor\frac{t-T}{T}\right\rfloor+1}{O_3}} \end{bmatrix}^H ;$$

$$W_t = \sqrt{e} W_1 \widetilde{\widetilde{W}}_2 \left( \begin{bmatrix} f_{d,1}((t-T) \bmod T)e^{j\frac{2\pi k_1\left\lfloor\frac{t-T}{T}\right\rfloor+1}{O_3}} \\ \vdots \\ f_{d,K}((t-T) \bmod T)e^{j\frac{2\pi k_K\left\lfloor\frac{t-T}{T}\right\rfloor+1}{O_3}} \end{bmatrix} \otimes W_f \right)^H ;$$

in which, $W_1$ represents a matrix composed of basis vectors corresponding to the spatial domain beam components, $\widetilde{\widetilde{W}}_2$ represents a matrix composed of the combination coefficients, $W_f$ represents a matrix composed of basis vectors corresponding to the frequency domain delay components, $f_{d,k}(T)$ represents elements in a $T^{th}$ row of the DFT basis vector, $k_K$ represents an index value of a $K^{th}$ DFT basis vector, $\sqrt{d}$ and $\sqrt{e}$ represents power normalization factors, $O_3$ represents an oversampling factor, and H represents a conjugate transpose of a matrix.

In an optional design, the downlink pilot signal includes at least one of the following:

a CSI-RS;
a DMRS; or
a combination of CSI-RS and DMRS.

It should be noted that when the device provided in the above embodiments implements its functions, the division of the above functional modules is only used as an example. In practical applications, the above functions can be allocated to different functional modules according to actual needs. That is, the content structure of the device is divided into different functional modules to complete all or part of the functions described above.

Regarding the devices in the above embodiments, the specific manner in which each module performs operations has been described in detail in the embodiments related to the method, and will not be described in detail here.

FIG. 11 shows a schematic diagram of a communication device (a terminal or a network device) provided by an exemplary embodiment of the present disclosure. The communication device 110 includes: a processor 1101, a receiver 1102, a transmitter 1103, a memory 1104 and a bus 1105.

The processor 1101 includes one or more processing cores. The processor 1101 executes various functional applications and information processing by running software programs and modules.

The receiver 1102 and the transmitter 1103 can be implemented as a communication component, and the communication component can be a communication chip.

The memory 1104 is connected to the processor 1101 through a bus 1105.

The memory 1104 can be used to store at least one instruction, and the processor 1101 is used to execute the at least one instruction to implement each step in the above method embodiment.

Additionally, the memory 1104 may be implemented by any type of volatile or non-volatile storage device, or combination thereof, including but not limited to: magnetic or optical disks, an electrically erasable programmable Read-only memory (Erasable Programmable Read Only Memory, EEPROM), an erasable programmable read-only memory (Erasable Programmable Read Only Memory, EPROM), a static random access memory (Static Random Access Memory, SRAM), a read-only memory (Read -Only Memory (ROM), a magnetic memory, a flash memory, a Programmable Read-Only Memory (PROM).

When the communication device is implemented as a terminal, the processor and transceiver in the communication device involved in the embodiments of the present disclosure can be implemented together as a communication chip, or the transceiver alone forms a communication chip. The transmitter in the transceiver performs the transmitting step performed by the terminal in any of the above method embodiments, the receiver in the transceiver performs the receiving step performed by the terminal in any of the above method embodiments, and the processor performs steps other than transmitting and receiving steps, which will not be described here.

When the communication device is implemented as a network device, the processor and transceiver in the communication device involved in the embodiments of the present disclosure can be implemented together as a communication chip, or the transceiver alone forms a communication chip. The transmitter in the transceiver performs the transmitting step performed by the network device in any of the above method embodiments, the receiver in the transceiver performs the receiving step performed by the network device in any of the above method embodiments, and the processor Perform steps other than transmitting and receiving steps, which will not be described here.

In an embodiment, a computer-readable storage medium is also provided, in which at least one instruction, at least one program, code set or instruction set is stored, and the at least one instruction, the at least one program, code set or instruction set is loaded and executed by the processor to implement the method for reporting CSI or the method for determining precoding matrix provided by any of the above method embodiments.

In an embodiment, a chip is also provided. The chip includes programmable logic circuits and/or program instructions. When the chip is run on a communication device, it is used to implement the method for reporting CSI or the method for determining precoding matrix provided by any of the above method embodiments.

In an embodiment, a computer program product is also provided. When the computer program product is run on a processor of a computer device, the computer device performs the above-mentioned method for reporting CSI or the method for determining precoding matrix.

Those skilled in the art should realize that in one or more of the above examples, the functions described in the embodiments of the present disclosure can be implemented using hardware, software, firmware, or any combination thereof. When implemented using software, the functions may be stored on or transmitted over as one or more instructions or code on a computer-readable medium. Computer-readable media includes computer storage media and communication media including any medium that facilitates transfer of a computer program from one place to another. Storage media can be any available media that can be accessed by a general purpose or special purpose computer.

The above are only exemplary embodiments of the present disclosure and are not intended to limit the present disclosure. Any modifications, equivalent substitutions, improvements, etc. made within the spirit and principles of the present disclosure shall be included in the protection range of the present disclosure.

**Claims**

1. A method for reporting channel status information (CSI), performed by a terminal, comprising:

receiving downlink pilot signals transmitted by a network device at T consecutive time points;
estimating downlink channel information at the T consecutive time points according to the downlink pilot signals at the T consecutive time points;
determining CSI corresponding to the T consecutive time points according to the downlink channel information at the T consecutive time points; and
reporting the CSI to the network device;
wherein, the CSI is used by the network device to calculate a precoding matrix for downlink data transmission at a time point t, wherein the time point t is after the T consecutive time points, and T is a positive integer.

2. The method according to claim 1, wherein the CSI comprises at least one of:

spatial domain beam component indication information;
frequency domain delay component indication information;
time domain Doppler component indication information; or
combination coefficient indication information;
wherein, the spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal, wherein each of parameters L, $M_v$ and K is a positive integer.

3. The method according to claim 1, wherein the CSI comprises at least one of:

spatial domain beam component indication information;
frequency domain delay component indication information; or
combination coefficient indication information;
wherein, the spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal, wherein information on non-zero coefficient positions in matrices of the T groups of combination coefficients are the same, and the parameter L and the parameter $M_v$ are positive integers.

4. The method according to claim 2, wherein the parameter K is determined in at least one of following ways:

being configured by the network device;
being predefined through negotiation between the terminal device and the network device; or
being determined by the terminal according to the downlink channel information.

5. The method of claim 4, further comprising:
in a case where the terminal determines the parameter K according to the downlink channel information, reporting the parameter K determined by the terminal to the network device.

6. The method of claim 2, wherein the time domain Doppler component is represented by a phase offset between adjacent time points for transmitting the downlink pilot signals; or, the time domain Doppler component is represented by a basis vector.

7. The method according to claim 4, wherein, in a case where the time domain Doppler component is represented by the phase offset, the parameter K is determined by the terminal according to a number of non-zero coefficients for each transmission layer.

8. The method according to claim 2, wherein the time domain Doppler component meets at least one of following conditions:

time domain Doppler components corresponding to different polarization directions are the same or different;
time domain Doppler components corresponding to different spatial-frequency components are the same or different; or

time domain Doppler components corresponding to different time-frequency components are the same or different;

wherein, the spatial-frequency component is composed of the spatial domain beam component and the frequency domain delay component, the time-frequency component is composed of the frequency domain delay component and the time domain Doppler component.

9. The method according to claim 2, wherein, in a case where the downlink data transmission is multi-layer transmission, time domain Doppler components corresponding to different transmission layers are the same or different.

10. The method according to claim 6, wherein the time domain Doppler component is represented by the phase offset, and an expression of the time domain Doppler component is:

$$D = \begin{bmatrix} e^{j\varphi_{1,1}} & \cdots & e^{j\varphi_{1,M_v}} \\ \vdots & \ddots & \vdots \\ e^{j\varphi_{2L,1}} & \cdots & e^{j\varphi_{1,M_v}} \end{bmatrix};$$

wherein, $\varphi_{x,y}$ represents a phase offset value corresponding to an $x^{th}$ spatial domain beam component and a $y^{th}$ frequency domain delay component, the parameter L represents a number of the spatial domain beam components selected by the terminal, and the parameter $M_v$ represents a number of the frequency domain delay components selected by the terminal, and wherein the parameter L and the parameter $M_v$ are positive integers.

11. The method according to claim 10, wherein reporting the CSI to the network device comprises:
in a case of reporting the time domain Doppler component to the network device, reporting the phase offset value corresponding to the $x^{th}$ spatial domain beam component and the $y^{th}$ frequency domain delay component that meets a following condition:
an amplitude of a combination coefficient corresponding to the $x^{th}$ spatial domain beam component and the $y^{th}$ frequency domain delay component being not 0.

12. The method according to claim 6, wherein the time domain Doppler component is represented by the basis vector, and an expression of the time domain Doppler component is:

$$W_d = \begin{bmatrix} f_{d,1} & \cdots & f_{d,K} \end{bmatrix};$$

wherein, K basis vectors in the $W_d$ are selected by the terminal from candidate basis vectors; or, the K basis vectors in the $W_d$ are fixed or predefined basis vectors.

13. The method according to claim 6, wherein the time domain Doppler component is represented by the basis vector, and the basis vector comprises at least one of:

a discrete Fourier transform (DFT) basis vector;
a discrete cosine transform (DCT) basis vector; or
a polynomial basis vector.

14. The method according to claim 1, wherein the parameter T is determined in at least one of following ways:

being configured by the network device; or
being predefined through negotiation between the terminal device and the network device.

15. The method according to claim 2, wherein, in a case where the parameter T and/or the parameter K are configured by the network device, the parameter T and/or the parameter K are configured for the terminal by the network device through at least one of following signalings:

a radio resource control (RRC) signaling;
a medium access control-control unit (MAC-CE) signaling; or
downlink control information (DCI).

**16.** The method according to claim 1, wherein the downlink pilot signal comprises at least one of:

a channel status information-reference signal (CSI-RS);
a demodulation reference signal (DMRS); or
a combination of the CSI-RS and the DMRS.

**17.** A method for determining a precoding matrix, performed by a network device, comprising:

transmitting downlink pilot signals to a terminal at T consecutive time points;
receiving CSI corresponding to the T consecutive time points reported by the terminal; and
calculating a precoding matrix for downlink data transmission at a time point t according to the CSI;
wherein the CSI is determined by the terminal according to the downlink pilot signals, the time point t is after the T consecutive time points, and T is a positive integer.

**18.** The method according to claim 17, wherein the CSI comprises at least one of:

spatial domain beam component indication information;
frequency domain delay component indication information; or
time domain Doppler component indication information; or
combination coefficient indication information;
wherein, the spatial domain beam component indication information is used to indicate L spatial domain beam components selected by the terminal, the frequency domain delay component indication information is used to indicate $M_v$ frequency domain delay components selected by the terminal, the time domain Doppler component indication information is used to indicate K time domain Doppler components selected by the terminal, and the combination coefficient indication information is used to indicate a combination coefficient determined by the terminal, wherein each of parameters L, $M_v$ and K is a positive integer.

**19.** The method according to claim 17, wherein the CSI comprises at least one of:

spatial domain beam component indication information;
frequency domain delay component indication information; or
combination coefficient indication information;
wherein, the spatial domain beam component indication information is used to indicate L spatial domain beam components selected by the terminal, the frequency domain delay component indication information is used to indicate $M_v$ frequency domain delay components selected by the terminal, and the combination coefficient indication information is used to indicate T groups of combination coefficients corresponding to the T consecutive time points determined by the terminal, wherein information on non-zero coefficient positions in matrices of the T groups of combination coefficients are the same, and the parameter L and the parameter $M_v$ are positive integers.

**20.** The method according to claim 18, wherein the time domain Doppler component is represented by a phase offset between adjacent time points for transmitting the downlink pilot signals; or the time domain Doppler component is represented by a basis vector.

**21.** The method according to claim 20, wherein the time domain Doppler component is represented by the phase offset, and an expression of the time domain Doppler component is:

$$D = \begin{bmatrix} e^{j\varphi_{1,1}} & \cdots & e^{j\varphi_{1,M_v}} \\ \vdots & \ddots & \vdots \\ e^{j\varphi_{2L,1}} & \cdots & e^{j\varphi_{1,M_v}} \end{bmatrix};$$

wherein, $\varphi_{x,y}$ represents a phase offset value corresponding to an $x^{th}$ spatial domain beam component and a $y^{th}$ frequency domain delay component, the parameter L represents a number of the spatial domain beam components selected by the terminal, and the parameter $M_v$ represents a number of the frequency domain delay components selected by the terminal, wherein the parameter L and the parameter $M_v$ are positive integers.

**22.** The method according to claim 20, wherein the time domain Doppler component is represented by the basis vector, and an expression of the time domain Doppler component is:

$$W_d = [f_{d,1} \quad \cdots \quad f_{d,K}];$$

wherein, K basis vectors in the $W_d$ are selected by the terminal from candidate basis vectors; or, the K basis vectors in the $W_d$ are fixed or predefined basis vectors.

23. The method according to claim 21, wherein calculating the precoding matrix for downlink data transmission at the time point t according to the CSI comprises:

calculating the precoding matrix for downlink data transmission at the time point t according to the CSI by a following equation:

$$W = \sqrt{a} * W_1 \left( \widetilde{W}_2 \odot D \right) W_f^H;$$

wherein, $W_1$ represents a matrix composed of basis vectors corresponding to the spatial domain beam components, $\widetilde{W}_2$ represents a matrix composed of the combination coefficients, $W_f$ represents a matrix composed of basis vectors corresponding to the frequency domain delay components, $\sqrt{a}$ represents a power normalization factor, and H represents a conjugate transpose of a matrix.

24. The method according to claim 22, wherein calculating the precoding matrix for downlink data transmission at the time point t according to the CSI comprises:

calculating the precoding matrix for downlink data transmission at the time point t according to the CSI by at least one of following equations:

$$W = \sqrt{b}(W_f^* \otimes W_1)\widetilde{\widetilde{W}}_2 W_d^H;$$

$$W = \sqrt{c} W_1 \widetilde{\widetilde{W}}_2 (W_d \otimes W_f)^H;$$

wherein, $W_1$ represents a matrix composed of basis vectors corresponding to the spatial domain beam components, $\widetilde{\widetilde{W}}_2$ represents a matrix composed of the combination coefficients, $W_f$ represents a matrix composed of basis vectors corresponding to the frequency domain delay components, $\sqrt{b}$ and $\sqrt{c}$ represents power normalization factors, and H represents a conjugate transpose of a matrix.

25. The method according to claim 19, wherein calculating the precoding matrix for downlink data transmission at the time point t according to the CSI comprises:

calculating the precoding matrix for downlink data transmission at the time point t according to the CSI by at least one of following equations:

$$W = \sqrt{a} * W_1 \left( \widetilde{W}_2 \odot D \right) W_f^H;$$

$$W = \sqrt{b}(W_f^* \otimes W_1)\widetilde{\widetilde{W}}_2 W_d^H;$$

$$W = \sqrt{c} W_1 \widetilde{\widetilde{W}}_2 (W_d \otimes W_f)^H;$$

wherein, $W_1$ represents a matrix composed of basis vectors corresponding to the spatial domain beam components, $\widetilde{W}_2$ and $\widetilde{\widetilde{W}}_2$ represent matrices composed of the combination coefficients, $W_f$ represents a matrix composed of basis vectors corresponding to the frequency domain delay components, D comprises time domain Doppler components represented by a phase offset between adjacent time points for transmitting the downlink pilot signals, $W_d$ comprises the time domain Doppler components represented by the basis vectors, D, $\tilde{W}_2$, $\widetilde{\widetilde{W}}_2$ and $W_d^H$ are determined according to T groups of combination coefficients, $\sqrt{a}$, $\sqrt{b}$ and $\sqrt{c}$ represents power normalization factors, and H represents a conjugate transpose of a matrix.

26. The method according to claim 21, wherein time intervals between adjacent time points in the T consecutive time points are equal, a time difference between the time point t and a first time point in the T consecutive time points is $\Delta t$, and $\Delta t$ is an integer multiple of the time interval between adjacent time points in the T consecutive time points; and wherein calculating the precoding matrix for downlink data transmission at the time point t according to the CSI comprises:

   calculating the precoding matrix for downlink data transmission at the time point t according to the CSI by following equations:

$$W_t = \sqrt{f}\, W_1\left(\tilde{W}_2 \odot D'\right) W_f^H;$$

$$D' = \begin{bmatrix} e^{j\Delta t\varphi_{1,1}} & \cdots & e^{j\Delta t\varphi_{1,M_v}} \\ \vdots & \ddots & \vdots \\ e^{j\Delta t\varphi_{2L,1}} & \cdots & e^{j\Delta t\varphi_{1,M_v}} \end{bmatrix};$$

   wherein, $W_1$ represents a matrix composed of basis vectors corresponding to the spatial domain beam components, $\tilde{W}_2$ represents a matrix composed of the combination coefficients, $W_f$ represents a matrix composed of basis vectors corresponding to the frequency domain delay components, $\sqrt{f}$ represents a power normalization factor, and the parameter L represents the number of the spatial domain beam components selected by the terminal, the parameter $M_v$ represents the number of the frequency domain delay components selected by the terminal, the parameter L and the parameter $M_v$ are positive integers, and H represents a conjugate transpose of a matrix .

27. The method according to claim 22, wherein the time domain Doppler component is represented by a discrete Fourier transform (DFT) basis vector, and time intervals between adjacent time points in the T consecutive time points are equal, t=T+n, indicating that the time point t is a time point after a last time point in the T time points, with a time interval from the last time point in the T time points being n times of a target time interval, wherein the target time interval is the time interval between adjacent time points in the T consecutive time points, and n is a positive integer; and wherein calculating the precoding matrix for downlink data transmission at the time point t according to the CSI comprises:

   calculating the precoding matrix for downlink data transmission at the time point t according to the CSI by at least one of following equations:

$$W_t = \sqrt{d}\,(W_f^* \otimes W_1)\widetilde{\widetilde{W}}_2 \begin{bmatrix} f_{d,1}((t-T) \bmod T)e^{j\frac{2\pi k_1\left\lfloor\frac{t-T}{T}\right\rfloor+1}{O_3}} \\ \vdots \\ f_{d,K}((t-T) \bmod T)e^{j\frac{2\pi k_K\left\lfloor\frac{t-T}{T}\right\rfloor+1}{O_3}} \end{bmatrix}^H;$$

$$W_t = \sqrt{e}\, W_1 \widetilde{\widetilde{W}}_2 \left(\begin{bmatrix} f_{d,1}((t-T) \bmod T)e^{j\frac{2\pi k_1\left\lfloor\frac{t-T}{T}\right\rfloor+1}{O_3}} \\ \vdots \\ f_{d,K}((t-T) \bmod T)e^{j\frac{2\pi k_K\left\lfloor\frac{t-T}{T}\right\rfloor+1}{O_3}} \end{bmatrix} \otimes W_f\right)^H;$$

wherein, $W_1$ represents a matrix composed of basis vectors corresponding to the spatial domain beam components, $\widetilde{\widetilde{W}}_2$ represents a matrix composed of the combination coefficients, $W_f$ represents a matrix composed of basis vectors corresponding to the frequency domain delay components, $f_{d,k}(T)$ represents elements in a $T^{th}$ row of the DFT basis vector, $k_K$ represents an index value of a $K^{th}$ DFT basis vector, $\sqrt{d}$ and $\sqrt{e}$ represents power normalization factors, $O_3$ represents an oversampling factor, and H represents a conjugate transpose of a matrix.

28. The method according to claim17, wherein the downlink pilot signal comprises at least one of:

   a channel status information-reference signal (CSI-RS); or
   a demodulation reference signal (DMRS); or
   a combination of the CSI-RS and the DMRS.

29. An apparatus for reporting channel status information (CSI), comprising:

   a receiving module, configured to receive downlink pilot signals sent by a network device at T consecutive time points;
   a determining module, configured to estimate downlink channel information at the T consecutive time points according to the downlink pilot signals at the T consecutive time points;
   wherein the determining module is further configured to determine CSI corresponding to the T consecutive time points according to the downlink channel information at the T consecutive time points; and
   a transmitting module, configured to report the CSI to the network device;
   wherein, the CSI is used by the network device to calculate a precoding matrix for downlink data transmission at a time point t, wherein the time point t is after the T consecutive time points, and T is a positive integer.

30. An apparatus for determining a precoding matrix, comprising:

   a transmitting module, configured to transmit downlink pilot signals to a terminal at T consecutive time points;
   a receiving module, configured to receive CSI corresponding to the T consecutive time points reported by the terminal; and
   a calculating module, configured to calculate a precoding matrix for downlink data transmission at a time point t according to the CSI;
   wherein the CSI is determined by the terminal according to the downlink pilot signals, and the time point t is after the T consecutive time points, and T is a positive integer.

31. A terminal, wherein, comprising:

   a processor;
   a transceiver coupled to the processor;
   a memory for storing executable instructions for the processor;
   wherein the processor is configured to load and execute the executable instructions to perform the method for reporting CSI according to any one of claims 1 to 16.

32. A network device, comprising:

   a processor;
   a transceiver coupled to the processor;
   a memory for storing executable instructions for the processor;
   wherein the processor is configured to load and execute the executable instructions to perform the method for determining a precoding matrix according to any one of claims 17 to 28.

33. A computer-readable storage medium, having executable instructions stored thereon that, when loaded and executed by a processor, the method for reporting CSI according to any one of claims 1 to 16 or the method for determining a precoding matrix according to any one of claims 17 to 28 is performed.

34. A chip, comprising a programmable logic circuit or program, configured to perform the method for reporting CSI according to any one of claims 1 to 16, or the method for determining a precoding matrix according to any of claims 17 to 28.

35. A computer program product, comprising computer instructions, wherein the computer instructions are stored in a computer-readable storage medium, a processor of a computer device reads the computer instructions from the computer-readable storage medium, and the processor executes the computer instructions, causing the computer device to perform the method for reporting CSI according to any one of claims 1 to 16, or the method for determining a precoding matrix according to any one of claims 17 to 28.

communication system 100

core network

30

20

access
network

10

terminal

FIG. 1

receiving downlink pilot signals transmitted by a network device at T consecutive time points

202

estimating downlink channel information at the T consecutive time points according to the downlink pilot signals at the T consecutive time points

204

determining CSI corresponding to the T consecutive time points according to the downlink channel information at the T consecutive time points

206

reporting the CSI to the network device

208

FIG. 2

transmitting downlink pilot signals to a terminal at T consecutive time points

302

receiving CSI corresponding to the T consecutive time points reported by the terminal

304

calculating a precoding matrix for downlink data transmission at a time point t according to the CSI

306

FIG. 3

| terminal | | network device |

402, transmitting downlink pilot signals to a terminal at T consecutive time points

404, estimating the downlink channel information at the T consecutive time points based on the downlink pilot signals at the T consecutive time points

406, determining a first type of CSI corresponding to the T consecutive time points based on the downlink channel information at T consecutive time points

408, reporting the first type of CSI

410, calculating the precoding matrix for downlink data transmission at the time point t based on the first type of CSI

FIG. 4

CSI-RS
burst

$t_0$

T

t

FIG. 5

| terminal | | network device |
|---|---|---|

602, transmitting downlink pilot signals to a
terminal at T consecutive time points

604, estimating the downlink
channel information at the T
consecutive time points based on
the downlink pilot signals at the
T consecutive time points

606, determining a second type
of CSI corresponding to the T
consecutive time points based on
the downlink channel
information at T consecutive
time points

608, reporting the second type of CSI

610, calculating the precoding
matrix for downlink data
transmission at the time point t
based on the second type of CSI

FIG. 6

CSI-RS
burst

$t_0$

T

t

FIG. 7

| terminal | | network device |
|---|---|---|

802, transmitting downlink pilot signals to a terminal at T consecutive time points

804, estimating the downlink channel information at the T consecutive time points based on the downlink pilot signals at the T consecutive time points

806, determining a third type of CSI corresponding to the T consecutive time points based on the downlink channel information at T consecutive time points

808, reporting the third type of CSI

810, calculating the precoding matrix for downlink data transmission at the time point t based on the third type of CSI

FIG. 8

receiving module — 901

determining module — 902

transmitting module — 903

FIG. 9

transmitting module — 1001

receiving module — 1002

calculating module — 1003

FIG. 10

communication device 110

processor — 1101

1103 — transmitter

bus — 1105

receiver — 1102

1104 — memory

FIG. 11

## INTERNATIONAL SEARCH REPORT

| International application No. |
| --- |
| **PCT/CN2022/089667** |

### A. CLASSIFICATION OF SUBJECT MATTER

H04W 24/10(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 信道状态信息, 导频, 下行参考信号, 信道, 估计, 预编码, 矩阵, 向量, 指示, 时间, 时刻, 移动, CSI, channel state, CSI-RS, DMRS, PMI, pre-coding, matrix, time, window, vector, domain, measurement, speed

### C. DOCUMENTS CONSIDERED TO BE RELEVANT

| Category* | Citation of document, with indication, where appropriate, of the relevant passages | Relevant to claim No. |
| --- | --- | --- |
| X | CN 113840324 A (HUAWEI TECHNOLOGIES CO., LTD.) 24 December 2021 (2021-12-24) description, paragraphs [0002]-[0289] | 1-35 |
| X | CN 113965232 A (HUAWEI TECHNOLOGIES CO., LTD.) 21 January 2022 (2022-01-21) description, paragraphs [0005]-[0377] | 1-35 |
| A | CN 109644364 A (GUANGDONG OPPO MOBILE COMMUNICATIONS CO., LTD.) 16 April 2019 (2019-04-16) entire document | 1-35 |
| A | WO 2022077484 A1 (HUAWEI TECHNOLOGIES CO., LTD.) 21 April 2022 (2022-04-21) entire document | 1-35 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 December 2022** | **16 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089667**

| Patent document cited in search report | | | Publication date (day/month/year) | Patent family member(s) | | | Publication date (day/month/year) |
|---|---|---|---|---|---|---|---|
| CN | 113840324 | A | 24 December 2021 | None | | | |
| CN | 113965232 | A | 21 January 2022 | None | | | |
| CN | 109644364 | A | 16 April 2019 | WO | 2019036851 | A1 | 28 February 2019 |
| WO | 2022077484 | A1 | 21 April 2022 | None | | | |

Form PCT/ISA/210 (patent family annex) (January 2015)